# EUROPÄISCHE PATENTSCHRIFT

(11) **EP 1 982 900 B1**
(45) Veröffentlichungstag und Bekanntmachung des Hinweises auf die Patenterteilung: **12.01.2011**
(21) Anmeldenummer: 08002228.8
(22) Anmeldetag: 07.02.2008
(51) Int. Cl.: B62D 25/08, B62D 21/11

(54) **Heckseitige Fahrzeugkarosseriestruktur**
Rear end automobile body structure
Structure de carrosserie de véhicule angulaire

(30) Priorität: 18.04.2007 DE 102007018167
(43) Veröffentlichungstag der Anmeldung: 22.10.2008
(73) Patentinhaber: Dr. Ing. h.c. F. Porsche AG, 70435 Stuttgart (DE)
(72) Erfinder: Hahlweg, Holger, 71263 Weil der Stadt (DE); Sträter, Jan Christian, 75391 Gechingen (DE)

(56) Entgegenhaltungen:
- EP-A- 0 285 131
- DE-A1- 19 507 767
- JP-A- 11 334 644
- US-A- 3 913 696
- US-A1- 2005 046 215

## Beschreibung

Die vorliegende Erfindung betrifft eine heckseitige Karosseriestruktur eines Fahrzeugs, insbesondere eines Personenkraftwagens, mit den Merkmalen des Oberbegriffs des Anspruchs 1.

Aus der DE 10 2005 044 908 A1 ist eine heckseitige Karosseriestruktur eines Fahrzeugs bekannt, die zwei Längsträger sowie einen Querträger umfasst, wobei der Querträger die beiden Längsträger miteinander jeweils in einem Verbindungsknoten verbindet. Auf jeder Fahrzeugseite ist eine Konsole vorgesehen, die den jeweiligen Verbindungsknoten von unten flächig und formintegriert abdeckt. Bei der bekannten Karosseriestruktur ist an der jeweiligen Konsole eine Sitzfläche zur Anbringung eines Sitzes für eine Aufhängungsfeder angebracht. Im Übrigen dient die Konsole zur Aussteifung des Verbindungsknotens.

Andere Karosseriestrukturen sind beispielsweise aus der US 6,109,653, aus der US 2002/0163173 A1 und aus der DE 103 42 807 A1 bekannt.

Aus der DE 195 07 767 A1 ist eine Karosseriestruktur bekannt, in welcher eine Buchse angeordnet ist, die mit der Karosseriestruktur verschweißt ist und welche unterseitig ein Kopfteil mit einem Flansch aufweist, der sich an einem Träger der Karosseriestruktur, welcher quasi einen Lagerteller bildet, von außen her bzw. von unten her abstützt und im Kopf ein Innengewinde angeordnet ist, welches zur Aufnahme einer Befestigungsschraube zum Festsetzen eines Fahrschemels dient.

Die vorliegende Erfindung beschäftigt sich mit dem Problem, für eine Karosseriestruktur der eingangs genannten Art eine verbesserte Ausführungsform anzugeben, die sich insbesondere durch eine erhöhte Funktionalität der Konsolen auszeichnet.

Dieses Problem wird erfindungsgemäß durch den Gegenstand des unabhängigen Anspruchs gelöst. Vorteilhafte Ausführungsformen sind Gegenstand des abhängigen Anspruchs.

Die Erfindung beruht auf dem allgemeinen Gedanken, an der jeweiligen Konsole einen Lagerteller auszubilden, der so ausgestaltet ist, dass daran ein Fahrschemel des Fahrzeugs abstützbar ist. Desweiteren wird vorgeschlagen, den jeweiligen Lagerteller mit wenigstens einer Durchgangsöffnung auszustatten, die es ermöglicht, den genannten Fahrschemel quasi durch die Konsole hindurch an der Karosseriestruktur anzuschrauben. Durch die vorgeschlagene Bauweise wird zum einen erreicht, dass die Konsole eine erhöhte Funktionalität besitzt, indem daran der heckseitige Fahrschemel des Fahrzeugs abstützbar ist. Durch die Integration dieser Fahrschemelabstützung in die Konsole kann auf eine separate Abstützung des Fahrschemels verzichtet werden. Die zusätzliche Funktionalität der Konsole führt somit zu einer Reduzierung der Herstellungskosten für die Karosseriestruktur. Zum anderen wird durch den Vorschlag, den jeweiligen Fahrschemel durch die Konsole hindurch am Verbindungsknoten bzw. an der Karosseriestruktur zu befestigen, eine hinreichend feste Anbindung zwischen Fahrschemel und Karosseriestruktur ermöglicht. Erst die Befestigung des Fahrschemels an der Karosseriestruktur durch die jeweilige Konsole hindurch ermöglicht es, den Lagerteller zur Abstützung des Fahrschemels an der Konsole auszubilden. Regelmäßig ist für eine Befestigung des Fahrschemels an der Konsole die Materialstärke der vorzugsweise als Blechformteil ausgestalteten Konsole zu gering, um die erwünschte Festigkeit einer Anbindung unmittelbar an der Konsole gewährleisten zu können.

Entsprechend einer bevorzugten Ausführungsform kann im jeweiligen Verbindungsknoten eine Buchse am jeweiligen Längsträger und/oder am Querträger befestigt sein, die zur jeweiligen Durchgangsöffnung des Lagertellers fluchtend ausgerichtet ist, ein Gewinde aufweist und von der Konsole abgedeckt ist. Mit Hilfe einer derartigen Buchse kann auf besonders einfache und preiswerte Weise eine hinreichend feste Anschraubstelle zur Befestigung des Fahrschemels an der Karosseriestruktur geschaffen werden.

Besonders vorteilhaft ist eine weitere Ausgestaltungsform, bei welcher die jeweilige Buchse als Stehbuchse ausgestaltet ist, die durch einen Stehkragen charakterisiert ist. Der Stehkragen ist an einer dem Verbindungsknoten zugewandten Innenseite der Konsole am Lagerteller flächig abgestützt und umschließt dabei die jeweilige Durchgangsöffnung. Durch diese Bauweise werden die Abstützkräfte, die vom Fahrschemel auf den Lagerteller übertragen werden, über die Stehbuchse in den Verbindungsknoten eingeleitet. In der Folge ist die Konsole selbst von den Stützkräften quasi entkoppelt. Insbesondere ist die Konsole so im wesentlichen keiner Biegebelastung ausgesetzt.

Weitere wichtige Merkmale und Vorteile der Erfindung ergeben sich aus den Unteransprüchen, aus den Zeichnungen und aus der zugehörigen Figurenbeschreibung anhand der Zeichnungen.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Bevorzugte Ausführungsbeispiele der Erfindung sind in den Zeichnungen dargestellt und werden in der nachfolgenden Beschreibung näher erläutert, wobei sich gleiche Bezugszeichen auf gleiche oder ähnliche oder funktional gleiche Bauteile beziehen.

Es zeigen, jeweils schematisch,
- Fig. 1: eine Ansicht von unten auf eine heckseitige Karosseriestruktur eines Fahrzeugs im Bereich eines Verbindungsknotens zwischen einem Längsträger und einem Querträger,
- Fig. 2: eine vereinfachte Schnittansicht entsprechend Schnittlinien II in Fig. 1,
- Fig. 3: eine vereinfachte Schnittansicht entsprechend Schnittlinien III in Fig. 1.

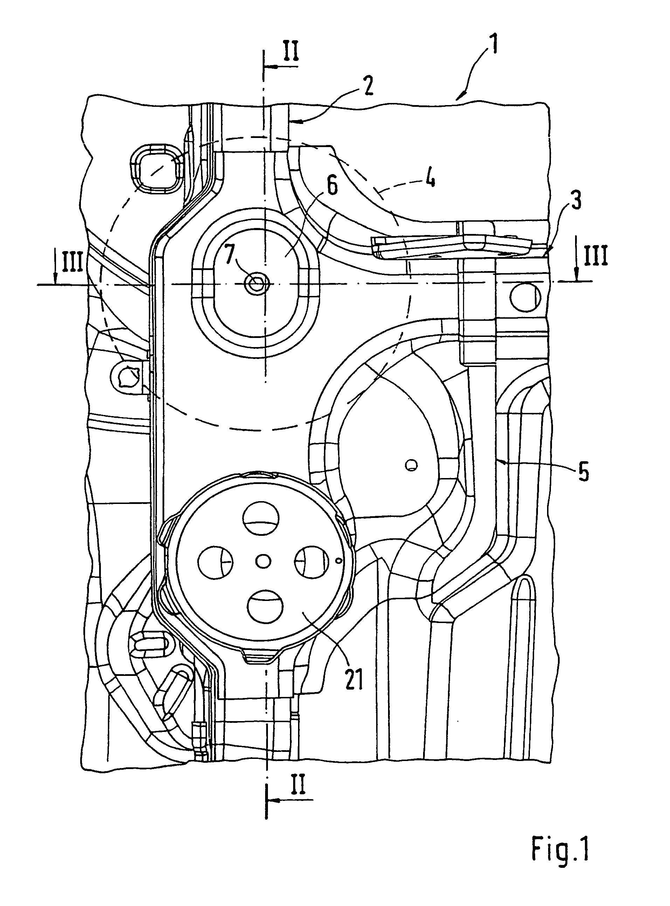

Entsprechend Fig. 1 umfasst eine hier nur teilweise dargestellte heckseitige Karosseriestruktur 1 eines im Übrigen nicht dargestellten Fahrzeugs, bei dem es sich vorzugsweise um einen Personenkraftwagen handelt, zwei Längsträger 2, von denen in dem in Fig. 1 dargestellten Ausschnitt der Karosseriestruktur 1 nur einer erkennbar ist. Dieser Längsträger 2 erstreckt im wesentlichen parallel zur Schnittlinie II und im wesentlichen parallel zur Fahrzeuglängsrichtung. Desweiteren umfasst die Karosseriestruktur 1 einen Querträger 3, der die beiden Längsträger 2 miteinander verbindet. Der Querträger 3 erstreckt sich im wesentlichen parallel zur Schnittlinie III und im wesentlichen quer zur Fahrzeuglängsrichtung. Die Anschlussstelle zwischen dem Querträger 3 und dem jeweiligen Längsträger 2 bildet einen Verbindungsknoten 4, der hier durch einen mit unterbrochener Linie gezeichneten Kreis angedeutet ist. Dieser Kreis umschließt im wesentlichen den Bereich der Karosseriestruktur 1, in dem sich der eigentliche Verbindungsknoten 4 befindet. Zentral im Verbindungsknoten 4 befindet sich ein gedachter Schnittpunkt zwischen dem Querträger 3 und dem jeweiligen Längsträger 2.

Die Karosseriestruktur 1 weist auf jeder Fahrzeugseite eine Konsole 5 auf, die den jeweiligen Verbindungsknoten 4 von unten, also an der in Fig. 1 dem Betrachter zugewandten Seite abdeckt. Dabei ist die Konsole 5 so gestaltet, dass sie quasi einen Negativabdruck der 3D-Kontur der Karosseriestruktur 1 im Bereich des Verbindungsknotens 4 bildet. Auf diese Weise kann die Konsole 5 formintegriert an die Karosseriestruktur 1 angebaut werden. Beispielsweise übergreift die Konsole 5 seitlich sowohl den Querträger 3 als auch den jeweiligen Längsträger 2. Hierdurch wird im Bereich des Verbindungsknotens 4 bzw. in dem von der Konsole 5 flächig und formintegriert abdeckten Bereich der Karosseriestruktur 1 eine Materialverdopplung erzielt, die in Verbindung mit einer entsprechenden Befestigungstechnik zu einer signifikanten Aussteifung der Karosseriestruktur 1 im Bereich des Verbindungsknotens 4 führt. Eine geeignete Verbindungstechnik ist beispielsweise das Setzen von Schweißnähten und/oder Schweißpunkten. Die Konsole 5 ist vorzugsweise als Blechformteil ausgestaltet.

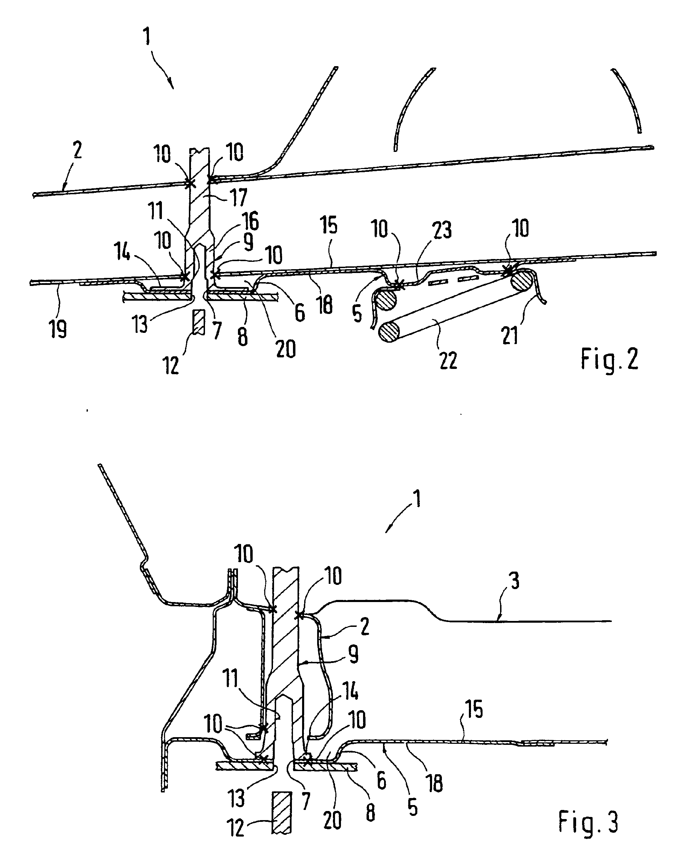

Die jeweilige Konsole 5 weist einen Lagerteller 6 auf, in dem zumindest eine die Konsole 5 durchdringende Durchgangsöffnung 7 ausgebildet ist. Der Lagerteller 6 ist so ausgestaltet, dass daran ein in den Fig. 2 und 3 angedeuteter Fahrschemel 8 des Fahrzeugs abstützbar ist. Die Durchgangsöffnung 7 ermöglicht es, den genannten Fahrschemel 8, wenn er am Lagerteller 6 abgestützt ist, durch die Durchgangsöffnung 7 hindurch und somit durch die Konsole 5 hindurch an der Karosseriestruktur 1 anzuschrauben.

Zu diesem Zweck weist die Karosseriestruktur 1 entsprechend den Fig. 2 und 3 im jeweiligen Verbindungsknoten 4 eine Buchse 9 auf, die auf geeignete Weise an der Karosseriestruktur 1 befestigt ist. Beispielsweise ist die Buchse 9 am Längsträger 2 befestigt. Zusätzlich oder alternativ kann die Buchse 9 am Querträger 3 befestigt sein. Bei der in Fig. 3 gezeigten Ausführungsform ist die Buchse 9 außerdem an der Konsole 5 befestigt. Die Befestigung der Buchse 9 an der Karosseriestruktur 1 erfolgt beispielsweise mittels Schweißnähten oder Schweißpunkten, die in den Fig. 2 und 3 durch Kreuze markiert und mit 10 bezeichnet sind. Die Buchse 9 weist ein Gewinde 11 auf und ist bezüglich der Durchgangsöffnung 7 des Lagertellers 6 fluchtend ausgerichtet. Desweiteren ist die Buchse 9 von der Konsole 5 abgedeckt. Auf diese Weise kann der Fahrschemel 8 mit Hilfe einer hier nur teilweise dargestellten Schraube 12 mit der Karosseriestruktur 1 verschraubt werden, in dem die Schraube 12 eine Befestigungsöffnung 13, die im Fahrschemel 8 ausgebildet, und die Durchgangsöffnung 7 durchdringt und in die Buchse 9 bzw. in deren Gewinde 11 eingeschraubt wird.

Bei den hier gezeigten, bevorzugten Ausführungsformen ist die Buchse 9 als Stehbuchse ausgestaltet, die im Folgenden ebenfalls mit 9 bezeichnet wird. Die Stehbuchse 9 weist einen Stehkragen 14 auf, der an einem der Konsole 5 zugewandten Ende der Stehbuchse 9 radial absteht. Dieser Stehkragen 14 ist an einer dem Verbindungsknoten 4 zugewandten Innenseite 15 der Konsole 5 am Lagerteller 6 flächig abgestützt. Dabei ist die Buchse 9 so ausgerichtet, dass der Stehkragen 14 die Durchgangsöffnung 7 umschließt. Auf diese Weise wird erreicht, dass einerseits der Lagerteller 6 axial zwischen dem Fahrschemel 8 und der Stehbuchse 9 verspannt wird, wenn der Fahrschemel 8 an der Karosseriestruktur 1 befestigt wird. Andererseits wird dadurch der Lagerteller 6 - abgesehen von axialen Einspannkräften - von einer axialen Kraftübertragung zwischen Fahrschemel 8 und Stehbuchse 9 und somit von axialen Übertragungskräften zwischen Fahrschemel 8 und Karosseriestruktur 1 mehr oder weniger entkoppelt. Die Konsole 5 ist im Bereich des Lagertellers 6 über die Stehbuchse 9 am Verbindungsknoten 4 bzw. an der Karosseriestruktur 1 abgestützt, wodurch mit Hilfe des Lagertellers 6 eine für die Abstützung des Fahrschemels 8 geeignete Stelle geschaffen werden kann.

Die hier verwendete Buchse 9 besitzt eine stabförmige Bauweise. Insbesondere besitzt sie einen Gewindeabschnitt 16, der das Gewinde 11 enthält, und einen Stababschnitt 17, der beispielsweise als Vollkörper ausgestaltet ist. Die insoweit längliche Buchse 9 durchsetzt hier den Längsträger 2 sowie den Querträger 3. Da hier zumindest der Längsträger 2 als Hohlkörper ausgestaltet ist, ergibt sich hierdurch die Möglichkeit, die Buchse 9 im Bereich eines der Konsole 5 zugewandten Endes und im Bereich eines von der Konsole 5 entfernten Endes am Längsträger 2 bzw. am Querträger 3 abzustützen bzw. zu fixieren. Hierdurch können über die Buchse 9 auch Momente aufgenommen werden.

Der Lagerteller 6 weist an einer vom jeweiligen Verbindungsknoten 4 abgewandten Außenseite 18 der Konsole 5 eine ebene Fläche auf. Hierdurch wird eine definierte Anlagezone für die Kontaktierung mit dem Fahrschemel 8 geschaffen, die insbesondere einen Ausgleich von Lagetoleranzen ermöglicht. Desweiteren ist im gezeigten Beispiel der Lagerteller 6 an der Innenseite 15 der Konsole 5 ebenfalls mit einer ebenen Fläche ausgestattet. Somit kann auch an der Innenseite 15 des Lagertellers 6 eine Kontaktfläche geschaffen werden, die einen Ausgleich von Lagetoleranzen ermöglicht und die insbesondere für die Ubertragung von Stützkräften günstig ist.

Aus Fig. 2 ist entnehmbar, dass eine hier nicht näher bezeichnete Tellerebene, in welcher sich der Lagerteller 6 zumindest im Bereich der Durchgangsöffnung 7 erstreckt, gegenüber einer ebenfalls nicht bezeichneten Trägerebene, in welcher sich z.B. eine der Konsole 5 zugewandte Unterseite 19 des Längsträgers 2 zumindest im Bereich des Lagertellers 6 erstreckt, geneigt ist. Hierdurch kann eine für die Aufnahme von Abstützungskräften optimierte Orientierung des Lagertellers 6 erreicht werden.

Ferner steht der Lagerteller 6 gegenüber einem den Lagerteller 6 umschließenden Umgebungsbereich der Konsole 5 und somit gegenüber dem Längsträger 2 bzw. gegenüber dem Querträger 8 ab. Auf diese Weise wird im Bereich des Lagertellers 6 zwischen der Konsole 5 und dem Längsträger 2 bzw. dem Querträger 3 ein Hohlraum 20 geschaffen, der hier den Stehkragen 14 aufnimmt.

Gemäß Fig. 1 ist der Lagerteller 6 innerhalb der Konsole 5 so positioniert, dass er bezüglich des Verbindungsknotens 4 im wesentlichen zentrisch angeordnet ist. Insbesondere befindet sich der gedachte Schnittpunkt des Längsträgers 2 und des Querträgers 3 innerhalb des Lagertellers 6 und insbesondere innerhalb der Durchgangsöffnung 7. Im gezeigten Beispiel befindet sich die Durchgangsöffnung 7 zentrisch innerhalb des Lagertellers 6 und somit im wesentlichen auch zentrisch bezüglich des gedachten Schnittpunkts zwischen Längsträger 2 und Querträger 3 und somit hier auch im wesentlichen zentrisch innerhalb des Verbindungsknotens 4.

Bei der hier gezeigten Ausführungsform weist die Konsole 5 gemäß den Fig. 1 und 2 außerdem einen Aufnahmetopf 21 auf, über den eine Federeinrichtung 22 an der Konsole 5 und über diese an der Karosseriestruktur 1 im Bereich des Verbindungsknotens 4 abstützbar ist. Der Aufnahmetopf 21 ist beispielsweise an eine geeignete Erhebung 23 angeschweißt, die in der Konsole 5 ausgeformt ist. Entsprechende Schweißstellen sind ebenfalls mit Kreuzen markiert und mit 10 bezeichnet. Durch eine entsprechende Gestaltung dieser Erhebung 23 kann der Aufnahmetopf 21 besonders einfach an eine gewünschte Abstützrichtung angepasst werden. Der Aufnahmetopf 21 ist im gezeigten Beispiel in der Längsrichtung des Längsträgers 2 beabstandet vom Lagerteller 6 angeordnet.

## Patentansprüche

1. Heckseitige Karosseriestruktur eines Fahrzeugs, insbesondere eines Personenkraftwagens, mit zwei Längsträgern (2) die durch einen Querträger (3) miteinander verbunden sind, wobei auf jeder Fahrzeugseite eine Konsole (5) vorgesehen ist, die jeweils einen Verbindunskonten (4), in dem der Querträger (3) am jeweiligen Längsträger (2) befestigt ist und von unten flächig und formintegriert abdeckt und die Konsole (5) einen Lagerteller (6) aufweist, an dem ein Fahrschemel (8) des Fahrzeugs abgestützt ist und der Lagerteller (6) zumindest eine Durchgangsöffnung (7) aufweist, durch die der Fahrschemel (8) über eine Gewindebuchse (9) an die Karosseriestruktur (1) anschraubbar ist, **dadurch gekennzeichnet, dass** im Verbindungsknoten (4) eine von der Konsole (5) abgedeckte, zur jeweiligen Durchgangsöffnung (7) fluchtend ausgerichtete, ein Gewinde (11) aufweisende Buchse (9) am jeweiligen Längsträger (2) oder am Querträger (3) befestigt ist und die Buchse (9) als Stehbuchse ausgestaltet ist, die einen Stehkragen (14) aufweist, der an einer den Verbindungsknoten (4) zugewandten Innenseite (15) der Konsole (5) am Lagerteller (6) flächige abgestützt ist und die Konsole (5) beabstandet zum Lagerteller (6) ein Aufnahmetopf (21) für eine Federeinrichtung (22) aufweist.

2. Karosseriestruktur nach Anspruch 1, **dadurch gekennzeichnet, dass** eine Tellerebene, in welcher sich ein die Durchgangsöffnung (7) umschließender Randbereich des Lagertellers (6) erstreckt, gegenüber einer Trägerebene, in welcher sich zumindest ein den Lagerteller (6) umschließender Umgebungsbereich der Konsole (5) erstreckt, geneigt ist.

## Claims

1. Rear end automobile body structure, in particular of a passenger vehicle, with two longitudinal members (2) which are connected to each other by a cross member (3), wherein a console (5) is provided on each side of the vehicle, said console in each case covering a connecting junction (4), in which the cross member (3) is fastened to the respective longitudinal member (2), from below in a planar and shape-integrated manner, and the console (5) has a bearing plate (6) on which a subframe (8) of the vehicle is supported, and the bearing plate (6) has at least one passage opening (7) through which the subframe (8) can be bolted to the body structure (1) via a threaded bushing (9), **characterized in that**, in the connecting junction (4), a bushing (9) which is covered by the console (5), is aligned with the respective passage opening (7) and has a thread (11) is fastened to the respective longitudinal member (2) or to the cross member (3), and the bushing (9) is configured as vertical bushing which has a vertical collar (14) which is supported in a planar manner on the bearing plate (6) on an inner side (15) of the console (5), which side faces the connecting junction (4), and, at a distance from the bearing plate (6), the console (5) has a receiving cup (21) for a spring device (22).

2. Body structure according to Claim 1, **characterized in that** a plate plane in which a border region of the bearing plate (6), which border region surrounds the passage opening (7), extends is inclined in relation to a support plane in which at least one surrounding region of the console (5), which surrounding region surrounds the bearing plate (6), extends.

## Revendications

1. Structure de carrosserie arrière d'un véhicule, notamment d'un véhicule léger, comprenant deux supports longitudinaux (2) qui sont connectés l'un à l'autre par un support transversal (3), une console (5) étant prévue sur chaque côté du véhicule, laquelle recouvre par le dessous, à plat et par intégration de forme, à chaque fois un noeud de connexion (4) dans lequel le support transversal (3) est fixé sur le support longitudinal respectif (2), et la console (5) présente un disque de palier (6) sur lequel est supporté un sous-châssis (8) du véhicule, et le disque de palier (6) présente au moins une ouverture de passage (7), à travers laquelle le sous-châssis (8) peut être vissé par le biais d'une douille filetée (9) à la structure de carrosserie (1), **caractérisée en ce qu'**une douille (9) présentant un filetage (11), recouverte dans le noeud de connexion (4) par la console (5), orientée en affleurement avec l'ouverture de passage respective (7), est fixée sur le support longitudinal respectif (2) ou sur le support transversal (3), et la douille (9) est configurée sous forme de douille droite, qui présente un bord d'appui (14) qui est supporté à plat sur le disque de palier (6) sur un côté interne (15) de la console (5) tourné vers le noeud de connexion (4), et la console (5) présente, à distance du disque de palier (6), un pot de réception (21) pour un dispositif de ressort (22).

2. Structure de carrosserie selon la revendication 1, **caractérisée en ce qu'**un plan de disque dans lequel s'étend une région de bord du disque de palier (6) entourant l'ouverture de passage (7), est incliné par rapport à un plan de support dans lequel s'étend au moins une région périphérique de la console (5) entourant le disque de palier (6).
